Europäisches Patentamt

European Patent Office

Office européen des brevets

(11) Publication number: **0 080 216**
**B1**

## (12) EUROPEAN PATENT SPECIFICATION

(45) Date of publication of patent specification: **09.04.86**

(51) Int. Cl.⁴: **C 01 B 17/04,** F 23 D 14/60

(21) Application number: **82201157.3**

(22) Date of filing: **17.09.82**

(54) **Process for combusting hydrogen sulphide-containing gases and burner for use in such a process.**

(30) Priority: **14.10.81 GB 8130995**

(43) Date of publication of application:
**01.06.83 Bulletin 83/22**

(45) Publication of the grant of the patent:
**09.04.86 Bulletin 86/15**

(84) Designated Contracting States:
**BE CH DE FR IT LI NL SE**

(56) References cited:
**EP-A-0 034 848**
**EP-A-0 049 008**
**DE-B-1 154 223**
**DE-C- 326 698**
**DE-C- 476 614**
**GB-A-2 035 537**
**US-A-2 989 119**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Loof, Philippus
Carel van Bylandtlaan 30
NL-2596 HR The Hague (NL)**
Inventor: **Van den Bosch, Albertus Vincentius
Petrus
Carel van Bylandtlaan 30
NL-2596 HR The Hague (NL)**

(74) Representative: **Aalbers, Onno et al
P.O. Box 302
NL-2501 CH The Hague (NL)**

Courier Press, Leamington Spa, England.

## Description

The invention relates to a process for combusting hydrogen sulphide (H$_2$S)-containing gases in the thermal zone of a sulphur recovery unit, in which hydrogen sulphide-containing gases are partially combusted to a mixture of sulphur dioxide and hydrogen sulphide in a molar ratio of substantially 1:2 by supplying said hydrogen sulphide-containing gases to a burner comprising a burner gun, surrounded by an air register provided with openings for the supply of a free oxygen-containing gas or gas mixture to an air chamber, which burner gun debouches into a mixing zone of the air chamber, said air chamber being in fluid communication with a combustion chamber via an air nose, in which process a hydrogen sulphide-containing gas is mixed in the mixing zone with a free oxygen-containing gas or gas mixture supplied to the mixing zone via the air register. The invention also relates to a burner for use in such a process.

The recovery of elemental sulphur from H$_2$S-containing gases by means of the Claus reaction is well known and different procedures for carrying out this reaction are being applied in practice.

E.g. European patent application 34.848 discloses partially combusting H$_2$S-containing gases with air or another free oxygen-containing gas in a thermal zone to form a gas mixture containing sulphur dioxide (SO$_2$) and H$_2$S in a preferred molar ratio of 1:2, using a burner comprising a burner gun surrounded by an air register provided with openings for the supply of air.

The gases are subsequently cooled in order to condense the formed sulphur vapour and recover the sulphur as liquid sulphur. Subsequently, the gases are conducted to one or more catalytic reaction zones where an extra quantity of sulphur is formed. Before introduction into a catalytic reaction zone the gases are first brought to the desired reaction temperature and after leaving this zone they are re-cooled for recovery of the formed sulphur.

The H$_2$S-containing gases mostly originate from desulphurization processes in a refinery or from natural gas from which the acid gas components have been removed in gas purification units by means of absorption by certain absorbents. After regeneration of the absorbent used, an H$_2$S-enriched gas is obtained which possibly contains minor amounts of hydrocarbons.

Since it is generally not acceptable that the throughput of the main processing units where the H$_2$S is produced is restricted by the available Claus reaction capacity, the design capacity of the Claus reaction apparatus is normally determined by the maximum amount of H$_2$S which might be produced in the main processing units. Actual practice is that Claus reaction units operate most of the time below the design capacity. A yearly average utilization of only 35% of the installed Claus capacity is to be considered as normal.

Furthermore, the increasing legislation on environmental pollutions abatement urges more and more to the installation of spare Claus reaction capacity, which reduces the utilization of the Claus reaction units even further.

To prevent corrosion problems which may easily occur in an idle Claus unit is is necessary, even in case of a low H$_2$S production, that all available Claus units remain in operation. It is evident that with smaller amounts of H$_2$S produced a higher turndown ratio

$$\left(\frac{\text{actual load}}{\text{design load}}\right)$$

of the Claus units, sometimes even about 0.10, is required to avoid the necessity of flaring the H$_2$S.

The ability of a Claus unit to operate at a reduced actual load is in first instance limited by the performance in the thermal zone of the Claus installation, where the H$_2$S-containing gases are partially combusted with air to form a mixture of SO$_2$ and H$_2$S in substantially stoichiometric proportions. In order to achieve the attainable conversion/sulphur recovery in the thermal zone in combination with the production of bright yellow sulphur without soot formation, it is essential for the H$_2$S-containing gases to be intensively mixed with the combustion air.

To this end it is known to bring the combustion air into a strong rotary motion, and supplying the whirling combustion air to the H$_2$S-containing gases. The required mixing action may suitably be obtained in a burner comprising a burner gun provided with a supply tube for the supply of H$_2$S-containing gases, an air register surrounding the burner gun for the supply of free oxygen-containing gases into an air chamber, wherein the air chamber debouches into a combustion chamber via an air nose having an inner converging wall viewed in the direction of the combustion chamber. The air register normally consisting of a plurality of substantially tangentially arranged blade-shaped elements gives a gas upon passing therethrough a rotary motion. This motion, accelerated as the gas flows to the air nose, has it maximum velocity when the gas leaves the air nose. During operation of the above-mentioned burner an H$_2$S-containing gas is supplied via the supply tube in the burner gun to the air nose, whereas free oxygen-containing gas or gas mixture, normally air, is supplied to the air nose via the air register and the air chamber where the gas is brought in a rotary motion. The highly turbulent free oxygen-containing gas and the H$_2$S-containing gas are intensively mixed in the air nose prior to entering into the combustion chamber.

When the amount of H$_2$S-containing gases to be combusted for sulphur recovery decreases, the amount of free oxygen-containing gas should be reduced proportionally to maintain the for the process preferred molar ratio of 1:2 for the gas mixture of SO$_2$ and H$_2$S which is formed in the combustion chamber. However, reduction of the applied amount of free oxygen-containing gas implies a decrease of the rotary motion imparted to the gas upon passing through the air register. From the practice, it is known that the reduction of the applied amount of free oxygen-containing gas cannot be freely chosen but is restricted to a particular minimum below which the rotary motion of the gas by passing the air register is too small to obtain an intensive mixing of free oxygen and $H_2S$ in the air chamber, necessary for the process of the sulphur recovery. According to the practice, the process for combusting $H_2S$-containing gases can be satisfactorily applied to the throughputs of $H_2S$-containing gases of about 10% of the maximum throughput for which the applied burner in the process has been designed. Below the minimum throughput the pressure drop over the air register becomes too low to bring the free oxygen-containing gas in a sufficiently rotary motion. To guarantee a sufficient rotary motion of the free oxygen-containing gas upon contact with the acid gas the pressure drop over the air register and the air nose should have a certain minimum value. It will be clear that when the amount of applied free oxygen-containing gas is reduced the pressure drop over the air register and the air nose is also reduced. Since the applied amount of free oxygen-containing gas is substantially proportional with the amount of supplied acid gas, the amount of acid gas is bound to a minimum which can be treated in the known process for combusting acid gas in the thermal zone of a sulphur recovery unit.

This limitation in operating range has generally been recognized, and a well-known method to overcome this disadvantage is to supply a support fuel gas in the thermal zone of a sulphur recovery unit. As a result thereof the total consumption of free oxygen-containing gas is no longer proportional with the amount of supplied acid gas. A number of disadvantages are however encountered with the supply of support fuel gas in addition to acid gas, such as for example an impaired controllability of the required amount of air increasing the risk of soot formation, and an impaired sulphur recovery efficiency.

It is an object of the present invention to provide a process and a burner for use in this process enabling a satisfactory treatment of even very small amounts of $H_2S$-containing gas, up to and below 10% of the design throughput, without the application of support fuel gas in addition to the acid gas being essential and without substantially reducing the efficiency of the treatment.

The invention relates to a process for combusting hydrogen sulphide-containing gases in the thermal zone of a sulphur recovery unit, in which hydrogen sulphide-containing gases are partially combusted to a mixture of sulphur dioxide and hydrogen sulphide in a molar ratio of substantially 1:2 by supplying said hydrogen sulphide-containing gases to a burner comprising a burner gun, surrounded by an air register provided with openings for the supply of a free oxygen-containing gas or gas mixture to an air chamber, which burner gun debouches into a mixing zone of the air chamber, said air chamber being in fluid communication with a combustion chamber via an air nose, in which process a hydrogen sulphide-containing gas is mixed in the mixing zone with a free oxygen-containing gas or gas mixture supplied to the mixing zone via the air register, wherein the pressure drop of the free oxygen-containing gas or gas mixture over the air register and the air nose is maintained at or above a predetermined minimum value by partially blanking off the openings in the air register, the burner gun having a fixed position vis-à-vis the surrounding air register.

The burner for use in the process according to the invention comprises a burner gun, surrounded by an air register provided with openings for the supply of a free oxygen-containing gas or gas mixture into an air chamber, which burner gun debouches into a mixing zone of the air chamber, said air chamber being provided with an air nose for forming a fluid communication with a combustion chamber, the burner further comprising means for partially blanking off the openings in the air register, the burner gun having a fixed position vis-à-vis the surrounding air register.

Since in the process for combusting $H_2S$-containing gases according to the invention the pressure drop over the air register and air nose can be artificially maintained at or above a predetermined minimum value, even very small amounts of $H_2S$-containing gases below 10% of the design throughput can be satisfactorily combusted.

From German patent specification 476.614, gas burners are known having a sleeve coaxially arranged with respect to the air register and partially blanking off the air register. In these burners the sleeve is fixed to the burner gun and thus sleeve and gun are displaced together.

According to a suitable embodiment of the invention, the openings in the air register for the supply of gas into the air chamber are blanked off by displacing a sleeve along the air register, and said sleeve being substantially coaxially arranged with respect to the air register. The displaceably arranged sleeve is pre-eminently suitable for suppressing resonation/vibration effects which may occur. Such effects loosen the fire-resistant ceramic lining and subsequently cause collapsing of the loosened lining.

According to a further suitable embodiment of the invention, the openings in the air register for the supply of gas into the air chamber are partially blanked off by turning rotatably mounted blade-shaped elements forming the air register.

The invention will now be described by way of example in more detail with reference to the accompanying drawing, wherein:—

Figure 1 shows a longitudinal cross section of the thermal zone of a sulphur recovery unit with a burner according to the invention;

Figure 2 shows a longitudinal cross section of an alternative for the burner shown in Figure 1; and

Figure 3 shows cross-section III—III of the burner shown in Figure 2.

It is to be understood that identical elements shown in the Figures have been indicated with the same reference numeral.

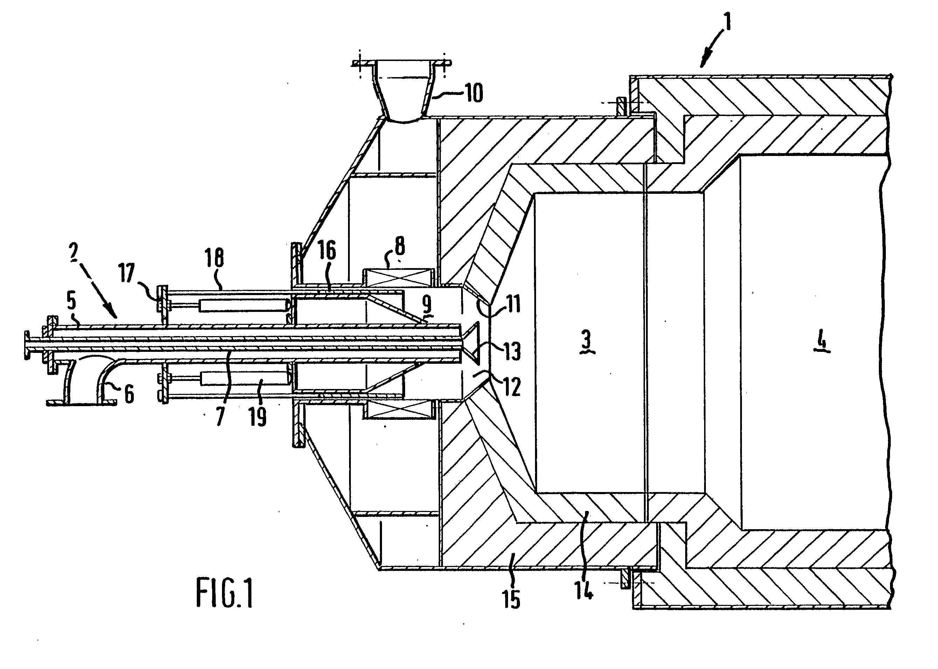

In Figure 1, reference numeral 1 indicates the thermal zone of a sulphur recovery unit. This thermal zone 1 is formed by a burner 2, a combustion chamber 3 and a reaction chamber 4. The burner 2 comprises a burner gun 5, having as main components a supply tube 6 for the supply of $H_2S$-containing gases and a supply tube 7 for the supply of support fuel gas. The supply tube 6 is substantially concentrically arranged around the supply tube 7. The burner 2 further comprises an air register 8 surrounding the burner gun 5 and being provided with openings through which air or another free oxygen-containing gas may be blown into an air chamber 9. The air register 8 may consist of a plurality of not separately shown blades substantially tangentially arranged with respect to the circumference of the air chamber 9, and spaced apart from each other to form openings for the passage of gas. An inlet 10 is provided for the supply of air into the burner 2. The air chamber 9 is provided with an air nose 11, forming a fluid communication between the air chamber 9 and the combustion chamber 3. The flame-faced end of the burner gun 5 is arranged in the air chamber 9 at some distance from the air nose 11 to provide a mixing zone 12. For mixing purposes the said flame-faced end of the burner gun 5 is provided with a conically shaped diffuser 13, and the air nose 11 converges in the direction of the combustion chamber 3. Both the combustion chamber 3 and the reaction chamber 4 are provided with a ceramic lining 14 which is applied on a heat-insulating layer 15. For controlling the pressure drop over the air register 8 and the air nose 11, the burner 2 is provided with a sleeve 16, arranged in the air chamber 9 at the inner side of the air register 8 and positioned co-axially therewith. The length of the sleeve 16 is chosen substantially equal to the length of the air register 8. The end of the sleeve 16 away from the air register 8 is connected to a disc-shaped wall 17, via a plurality of rods 18. The disc-shaped wall 17 is slidably arranged over the burner gun 5. One or more pneumatic or hydraulic actuators 19 are arranged at the front side of the burner 2 for displacing the wall 17. The dimensions of the openings in the air register 8 are determined by the maximum amount and quality of $H_2S$-containing gas which has to be treated in the thermal zone 1. At the maximum load the pressure drop over the air register 8 and the air nose 11 should for practical reasons not exceed a predetermined maximum value.

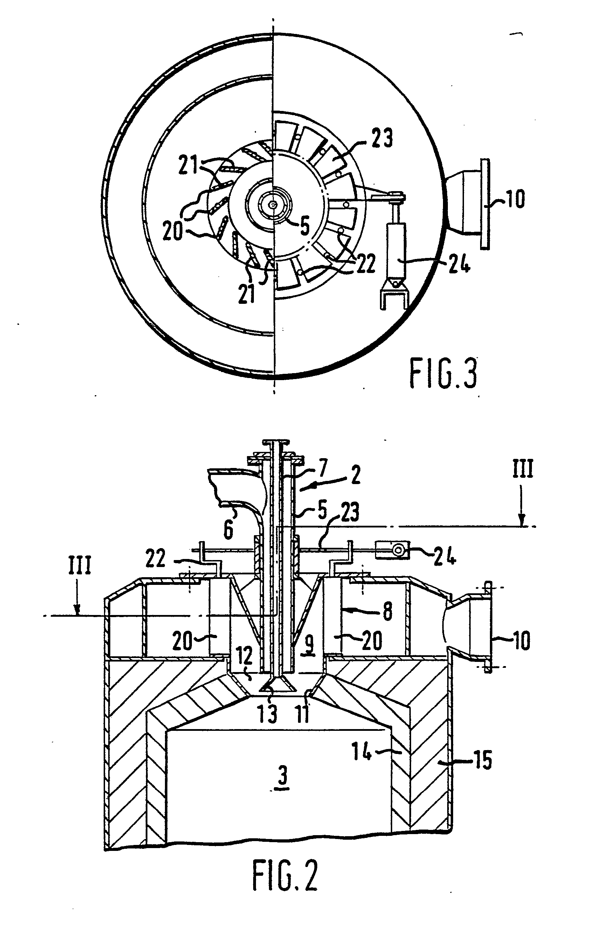

Reference is now made to Figures 2 and 3 showing an alternative of the burner 2 shown in Figure 1.

In this embodiment of the invention the air register 8 consists of a plurality of rotatable blade-shaped elements 20 spaced apart from each other. Rods 21 and 22 are mounted on the outer ends of each of the elements 20. The rods 21 are rotatably mounted in the vertical part of the wall of air nose 11.

The rods 22 fit in grooves of an annular wall 23 rotatably mounted on the burner gun 5. The blade-shaped elements 20 can be rotated by turning the annular wall 23 by means of a pneumatic or hydraulic actuator 24. Rotation of the elements 20 results in a variation of the width of the opening between each pair of adjacent elements 20.

The process for combusting $H_2S$-containing gas by means of the apparatus shown in the figures is as follows.

$H_2S$-containing gas is supplied via the supply tube 6 to the mixing zone 12 in the air chamber 9. A proportional amount of air or another free oxygen-containing gas is blown by a fan via the inlet 10 and the openings in air register 8 into said mixing zone 12. $H_2S$-containing gas and air brought in a rotary motion by passing air the air register 8 are intensively mixed prior to entering into the combustion chamber 3, and subsequently the reaction chamber 4, which provides a certain residence time in order to ensure that the various reactants will react with each other. The amount of air supplied is adjusted to the amount and quality of $H_2S$-containing gas to be treated, in such a manner that the gas mixture leaving the reaction chamber 4 contains $SO_2$ and $H_2S$ in a preferred molar ratio of 1:2. The amount of supplied air may be automatically readjusted when a variation in the supply of acid gas occurs. To this end a flow meter, installed in the supply tube 6, can be coupled to a flow control in the means for supplying the air to the inlet 10. When the amount of acid gas is about the maximum for which the thermal zone has been designed, the air register 8 is in a fully opened position. In the embodiment of Figure 1, this means that the sleeve 16 is arranged in a fully retracted position. In the embodiment of Figure 2, the fully opened position of the air register 8 is obtained by rotating the annular wall 23, so that the blades are substantially tangential to the air chamber 9.

To ensure a sufficient mixing of air and acid gas in the mixing zone of the air chamber 9, the pressure drop of the air stream over the air register 8 and the air nose 11 should preferably have a predetermined minimum value. When the amount of supplied air adjusted to the amount of supplied acid gas is reduced below a certain extent the pressure drop over the fully opened air register and air nose will become insufficient for ensuring the for the process necessary intensive mixing of acid gas and air. In this case the air register 8 is partially blanked off by displacement of the sleeve 16 or turning the blade-shaped elements 20, so that the pressure drop of the air over the air register is increased.

The blanking off of part of the openings in the air register may be carried out automatically. To this end a pressure drop meter for measuring the pressure drop over the air register and the air nose is coupled to the actuators for partially blanking off the openings in the air register. In this manner it is possible to maintain the pressure drop over the air register and the air nose at a constant value above the predetermined minimum value. When the velocity of the acid gas is again increased, the sleeve 16 or the blade-shaped elements may be moved for increasing the free passage in the air register 8.

The invention is not restricted to the means for blanking off the air register as shown in the drawings.

Instead of a displaceable sleeve or rotatable blade-shaped elements, for blanking off the openings in the air register, the air register may be formed by fixed blades provided with elongated elements hingeably connected to said blades, wherein compression spring means are arranged between said blades and elongated elements. The spring tension and the position of the elongated elements are chosen so that the openings for the passage of air are reduced when the air velocity is diminished.

The invention is not restricted to the application of pressure actuators for moving the sleeve 16 or the blade-shaped elements 20. Instead of such pressure actuators, manually operated handles may for example be applied. The invention is not restricted to a process and apparatus wherein an air nose is applied having a conical shape. The shown conical-shaped air nose 11, forming a constriction between the mixing zone of the air chamber and the combustion chamber, however, ensures a better mixing of air and acid gas than, for example, a cylindrically-shaped air nose.

Although in the above-described process, the quantity of supplied air is controlled outside the burner, it is also possible, without departing from the present invention, to control the air supply with the aid of the above-described means for partially blanking off the openings in the air register. In this procedure it is possible to maintain a constant pressure drop over the air register and the air nose independent of the amount of supplied air.

## Claims

1. A process for combusting hydrogen sulphide-containing gases in the thermal zone of a sulphur recovery unit, in which hydrogen sulphide-containing gases are partially combusted to a mixture of sulphur dioxide and hydrogen sulphide in a molar ratio of substantially 1:2 by supplying said hydrogen sulphide-containing gases to a burner comprising a burner gun, surrounded by an air register provided with openings for the supply of a free oxygen-containing gas or gas mixture to an air chamber, which burner gun debouches into a mixing zone of the air chamber, said air chamber being in fluid communication with a combustion chamber via an air nose, in which process a hydrogen sulphide-containing gas is mixed in the mixing zone with a free oxygen-containing gas or gas mixture supplied to the mixing zone via the air register, characterized in that the pressure drop of the free oxygen-containing gas or gas mixture over the air register and the air nose is maintained at or above a predetermined minimum value by partially blanking off the openings in the air register, the burner gun having a fixed position vis-à-vis the surrounding air register.

2. A process as claimed in claim 1, wherein the openings in the air register are partially blanked off in the longitudinal direction of the air register.

3. A process as claimed in claim 1 or 2, wherein the openings in the air register are partially blanked off by displacing sleeve, along the air register, said sleeve being substantially co-axially arranged with respect to the air register.

4. A process as claimed in claim 1 or 2, wherein the openings in the air register are partially blanked off by turning rotatable blade-shaped elements forming the air register.

5. A process as claimed in any one of the preceding claims, wherein the pressure drop of the free oxygen-containing gas or gas mixture is maintained at a substantially constant value above the predetermined minimum value.

6. A burner for use in the process as claimed in claim 1, comprising a burner gun, surrounded by an air register provided with openings for the supply of a free oxygen-containing gas or gas mixture into an air chamber, which burner gun debouches into a mixing zone of the air chamber, said air chamber being provided with an air nose for forming a fluid communication with a combustion chamber, characterized in that the burner further comprises means for partially blanking off the openings in the air register, the burner gun having a fixed position vis-à-vis the surrounding air register.

7. A burner as claimed in claim 6, wherein the means for partially blanking off the openings in the air register comprises a sleeve substantially co-axially arranged with the air register, said sleeve being displaceably arranged in longitudinal direction of the burner.

8. A burner as claimed in claim 7, wherein the sleeve is arranged at the inner side of the air register.

9. A burner as claimed in claim 6, wherein the air register is formed by rotatable blade-shaped elements, and wherein means are provided for turning the rotatable blade-shaped elements for partially blanking off the openings in the air register.

## Patentansprüche

1. Verfahren zum Verbrennen von Schwefelwasserstoff enthaltenden Gasen in der Wärmezone einer Schwefelwiedergewinnungseinheit, in welcher Schwefelwasserstoff enthaltende Gase teilweise verbrannt werden zu einem Gemisch aus Schwefeldioxid und Schwefelwasserstoff in einem Moverhältnis von im wesentlichen 1:2, indem die Schwefelwasserstoff enthaltenden Gase einem Brenner zugeführt werden, der eine Brennerpistole aufweist, die von einem Luftregister umgeben ist, welches mit Öffnungen versehen ist für die Zufuhr eines freien Sauerstoff enthaltenden Gases oder Gasgemisches zu einer Luftkammer, wobei die Brennerpistole in eine Mischzone der Luftkammer mündet und die Luftkammer sich über eine Luftnase in Fluidverbindung mit einer Verbrennungskammer befindet, und wobei bei dem Verfahren ein Schwefelwasserstoff enthaltendes Gas in der Mischzone mit einem freien Sauerstoff enthaltenden Gas oder Gasgemisch gemischt wird, welches der Mischzone über das Luftregister zugeführt wird, dadurch gekennzeichnet, daß der Druckabfall des freien Sauerstoff enthaltenden Gases oder Gasgemisches an dem Register und der Luftnase an oder oberhalb eines vorbestimmten minimalen Wertes gehalten wird durch teilweises Verschließen der Öffnungen in dem Liftregister, und daß die Brennerpistole eine festgelegte Stellung gegenüber dem umgebenden Luftregister hat.

2. Verfahren nach Anspruch 1, bei welchem die Öffnungen in dem Luftregister in Längsrichtung des Luftregisters teilweise verschlossen werden.

3. Verfahren nach Anspruch 1 oder 2, bei welchem die Öffnungen in dem Luftregister teilweise verschlossen werden dadurch, daß eine Hülse entlang des Luftregisters verschoben wird, die mit Bezug auf das Luftregister im wesentlichen gleichachsig angeordnet ist.

4. Verfahren nach Anspruch 1 oder 2, bei welchem die Öffnungen in dem Luftregister dadurch teilweise verschlossen werden, daß drehbare blatt- oder schaufelartige Elemente gedreht werden, die das Luftregister bilden.

5. Verfahren nach irgendeinem der vorhergehenden Ansprüche, bei welchem der Druckabfall des freien Sauerstoff enthaltenden Gases oder Gasgemisches auf einem im wesentlichen konstanten Wert oberhalb des vorbestimmten minimalen Wertes gehalten wird.

6. Brenner zur Verwendung in dem Verfahren nach Anspruch 1, mit einer Brennerpistole, die von einem Luftregister umgeben ist, welches mit Öffnungen für die Zufuhr eines freien Sauerstoff enthaltenden Gases oder Gasgemisches in eine Luftkammer versehen ist, wobei die Brennerpistole in eine Mischzone der Luftkammer mündet und die Luftkammer mit einer Luftnase versehen ist, um eine Fluidverbindung mit einer Verbrennungskammer zu bilden, dadurch gekennzeichnet, daß der Brenner weiterhin Mittel zum teilweisen Verschließen der Öffnungen in die Luftregister aufweist und die Brennerpistole gegenüber dem umgebenden Luftregister eine festgelegte Stellung hat.

7. Brenner nach Anspruch 6, bei welchem die Mittel zum teilweisen Verschließen der Öffnungen in dem Luftregister eine Hülse aufweisen, die mit dem Luftregister im wesentlichen gleichachsig angeordnet ist und die in Längsrichtung des Brenners verschiebbar angeordnet ist.

8. Brenner nach Anspruch 7, bei welchem die Hülse an der Innenseite des Luftregisters angeordnet ist.

9. Brenner nach Anspruch 6, bei welchem das Luftregister durch drehbare blatt- oder schaufelförmige Elemente gebildet ist, und bei welchem Mittel vorgesehen sind, um die drehbaren blatt- oder schaufelförmigen Elemente zu drehen, um die Öffnungen in dem Luftregister teilweise zu verschließen.

**Revendications**

1. Procédé pour faire brûler des gaz contenant de l'hydrogène sulfuré (acid sulfhydrique) dans la zone thermique d'une unité de récupération de soufre, où l'on fait brûler partiellement des gaz contenant de l'hydrogène sulfuré pour donner un mélange d'anhydride sulfureux et d'hydrogène sulfuré dans un rapport molaire de substantiellement 1:2 en fournissant lesdits gaz contenant de l'hydrogène sulfuré à un brûleur comprenant un canon de brûleur, entouré par un registre à air muni d'ouvertures pour la fourniture d'un gaz ou mélange gazeux à une chambre à air, lequel canon de brûleur débouche dans une zone de mélange de la chambre à air, ladite chambre à air étant en communication fluide avec une chambre à combustion via un gicleur à air, dans lequel procédé on mélange un gaz contenant de l'hydrogène sulfuré dans la zone de mélange avec un gaz ou mélange gazeux contenant de l'oxygène libre fourni à la zone de mélange via le registre à air, caractérisé en ce que la baisse de pression du gaz ou mélange gazeux contenant de l'oxygène libre au-dessus du registre à air et du gicleur à air est maintenue à ou au-dessus d'une valeur minimum prédéterminée par obturation partielle des ouvertures dans le registre à air, le canon de brûleur ayant une position fixe vis-à-vis du registre à air qui l'entoure.

2. Procédé selon la revendication 1, où les ouvertures dans le registre à air sont partiellement obturées dans la direction longitudinale du registre à air.

3. Procédé selon les revendications 1 et 2 où les ouvertures dans le registre à air sont partiellement obturées par le déplacement d'un manchon, le long du registre à air, ledit manchon étant disposé de façon substantiellement coaxiale par rapport au registre à air.

4. Procédé selon les revendications 1 et 2, où les ouvertures dans le registre à air sont partiellement obturées par la rotation d'éléments en forme de lame pouvant tourner et formant le registre à air.

5. Procédé selon l'une quelconque des revendications précédentes où la baisse de pression du gaz ou mélange gazeux contenant de l'oxygène libre est maintenue à une valeur substantiellement constante au-dessus de la valeur minimum prédéterminée.

6. Brûleur pour application dans le procédé selon la revendication 1 comprenant un canon de brûleur, entouré par un registre à air muni d'ouvertures pour la fourniture d'un gaz ou mélange gazeux contenant de l'oxygène libre dans une chambre à air, lequel canon de brûleur débouche dans une zone de mélange de la chambre à air, ladite chambre à air étant munie d'un gicleur à air pour former une communication fluide avec une chambre de combustion, caractérisé en ce que le brûleur comprend en outre des moyens pour obturer partiellement les ouvertures dans le registre à air, le canon de brûleur ayant une position fixe vis-à-vis du registre à air qui l'entoure.

7. Brûleur selon la revendication 6, où les moyens pour obturer partiellement les ouvertures dans le registre à air comprennent un manchon disposé de façon substantiellement coaxiale avec le registre à air, ledit manchon étant disposé de façon déplaçable dans la direction longitudinale de brûleur.

8. Brûleur selon la revendication 7, où le manchon est disposé du côté intérieur du registre à air.

9. Brûleur selon la revendication 6, où le registre à air est formé par des éléments en forme de lame pouvant tourner, et où des moyens sont fournis pour faire tourner les éléments en forme de lame rotatifs pour obturer partiellement les ouvertures dans le registre à air.

FIG.1

0 080 216

FIG.3

FIG.2